# EUROPEAN PATENT APPLICATION

(11) **EP 3 623 162 A1**
(43) Date of publication of application: **18.03.2020**
(21) Application number: 19192614.6
(22) Date of filing: 20.08.2019
(51) Int. Cl.: B41J 11/04, B41J 2/32, B41J 29/38, F16H 57/00

(54) **DRIVING MECHANISM FOR PHOTO PRINTER**

(30) Priority: 11.09.2018 KR 20180108586
(71) Applicant: DS Global, Seoul 08505 (KR)
(72) Inventor: LEE, YONG DUK, 15815 Gyeonggi-do (KR)
(74) Representative: Appleyard Lees IP LLP

(57) **Abstract**

The present invention relates to a driving mechanism for a photo printer, the photo printer having a frame for accommodating paper therein and a platen roller coupled to the frame to transfer paper, and the driving mechanism includes: a motor for providing a rotary force to the platen roller; a motor pinion disposed on one side of the frame to output the rotary force of the motor; at least one or more reduction gears coupled to a side wall of the frame to reduce the rotary force of the motor pinion; a final gear coupled to the platen roller to receive the reduced rotary force from the reduction gears; and a pressurizing member for elastically pressurizing the reduction gears against the side wall of the frame.

## Description

### [Technical Field]

The present invention relates to a photo printer, and more particularly, to a driving mechanism for a photo printer that is capable of preventing gears fitted to a single shaft in parallel relation with each other from being repeatedly contacted with and separated from each other during rotation of the gears, thereby avoiding the generation of noise and vibrations from the gears and also improving a quality of print.

### [Background Art]

A camera mounted on a smart device like a smartphone has similar performance to a general digital camera, and many people have taken their pictures with their smart device carried always with them, not with a digital camera. Accordingly, a consumer's desire to take his or her picture and to instantly print the picture, without any separate conversion, has been gradually increased.

So as to satisfy such consumer's desire, photo printers have been proposed so that pictures on smartphones can be instantly printed whenever and wherever.

There are various kinds of photo printers. For example, there is a photo printer adopting a zero-ink printing technology using paper expressing colors in response to heat, and there is a photo printer adopting an ink ribbon technology using an ink ribbon responding to heat.

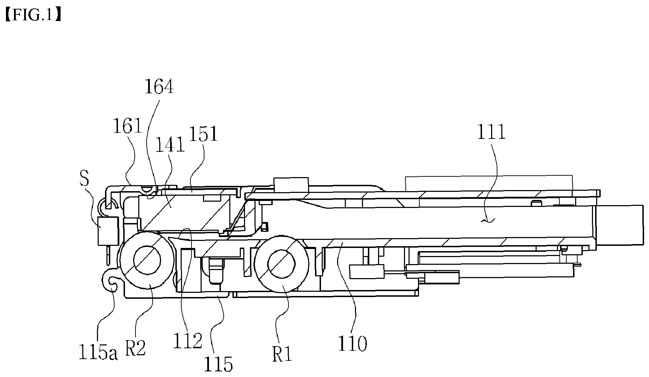

FIG.1 is a sectional view showing a conventional photo printer. As shown, the conventional photo printer includes a frame 110, a paper accommodating part 111 coupled between both side walls of the frame 110 to stackedly accommodate paper therein, a pickup roller R1 disposed protrudingly from a bottom surface of the paper accommodating part 111, a platen roller R2 coupled to the frame 110 to discharge the paper fed by the pickup roller R1 forward, and a thermal printing head 141 disposed above the platen roller R2 to apply given heat to the paper.

Further, an inclined guide portion 112 is formed on the front end of the paper accommodating part 111 to guide the paper between the head 141 and the platen roller R2.

Furthermore, the head 141 is coupled to a bracket 151 so that it can be rotatably coupled to the frame, and a pressurizing plate 161 is disposed above the bracket 151. A spring S is connected between the pressurizing plate 161 and a front frame 115 to elastically pull the head 141 downward.

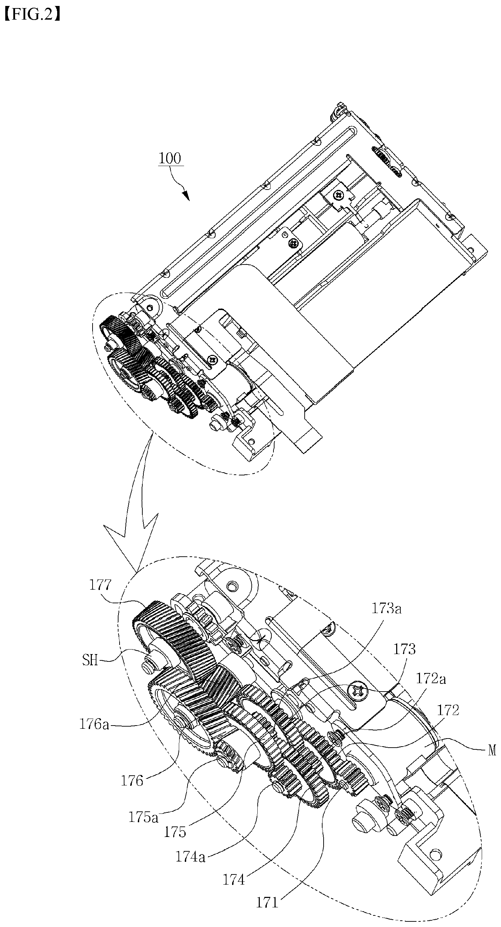

FIG.2 is a driving mechanism for transferring the paper in the conventional photo printer. As shown, the driving mechanism includes a motor M, a motor pinion 171, first to fifth reduction gears 172 to 176, and a final gear 177.

The motor pinion 171 is coupled to the motor M, and each of the first to fifth reduction gears 172 to 176 has a shape of a double gear having double gear teeth diameters on a common axis. Further, the final gear 177 is fitted to the platen roller R2.

A rotary force of the motor M is transferred to the motor pinion 171, and the motor pinion 171 engages with a first gear 172 of the first reduction gear. Next, a second gear 172a of the first reduction gear engages with a first gear 173 of the second reduction gear, and a second gear 173a of the second reduction gear engages with a first gear 174 of the third reduction gear. After that, a second gear 174a of the third reduction gear engages with a first gear 175 of the fourth reduction gear, and a second gear 175a of the fourth reduction gear engages with a first gear 176 of the fifth reduction gear. Sequentially, a second gear 176a of the fifth reduction gear engages with the final gear 177, so that the rotary force of the motor M is transferred to the platen roller R2.

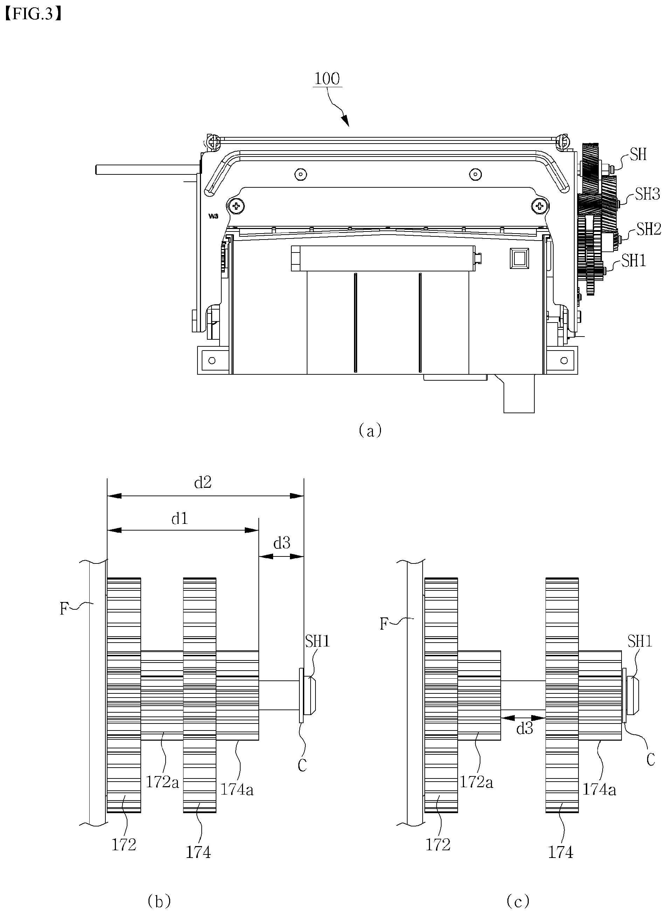

Referring to FIGS.3A and 3B, the first reduction gears 172 and 172a and the third reduction gears 174 and 174a are fitted to a single common rotary shaft SH1. In the same manner as above, the second reduction gears 173 and 173a and the fourth reduction gears 175 and 175a are fitted to a common rotary shaft SH2. On the other hand, only the fifth reduction gear is fitted to a rotary shaft SH3.

Referring in detail to FIG.3B, the rotary shaft SH1 is coupled to the frame F, and the first reduction gears 172 and 172a and the third reduction gears 174 and 174a are sequentially fitted to the rotary shaft SH1 in parallel relation with each other. Next, a snap ring (e.g., C ring) C is fitted to an end periphery of the rotary shaft SH1. The snap ring C is a fixing member for preventing the reduction gears from being separated from the rotary shaft SH1.

So as to allow the first reduction gears 172 and 172a and the third reduction gears 174 and 174a to be fitted to the rotary shaft SH1, further, a length of the rotary shaft SH1 has to be greater than a width of the first reduction gears 172 and 172a and the third reduction gears 174 and 174a (d2>d1). If the length of the rotary shaft SH1 is equal to or less than the width of the first reduction gears 172 and 172a and the third reduction gears 174 and 174a, the snap ring C cannot be fitted to the end periphery of the rotary shaft SH1, thereby making it impossible to fixedly couple the reduction gears to the rotary shaft SH1.

By the way, unfortunately, friction noise may be generated from the first reduction gears 172 and 172a and the third reduction gears 174 and 174a by means of a gap d3 formed by a difference between the length d2 of the rotary shaft SH1 and the width d1 of the first reduction gears 172 and 172a and the third reduction gears 174 and 174a.

In more detail, if the motor pinion 171 rotates by means of the drive of the motor M, the first reduction gears 172 and 172a engaging with the motor pinion 171 rotate at a high speed, and after that, the second reduction gears 173 and 173a and the third reduction gears 174 and 174a rotate at different rotation ratios. At this time, the first reduction gears 172 and 172a and the third reduction gears 174 and 174a move to left and right sides along the rotary shaft SH1 by means of the gap d3 formed by the difference between the length d2 of the rotary shaft SH1 and the width d1 of the first reduction gears 172 and 172a and the third reduction gears 174 and 174a.

Such movements cause the third reduction gear 174 and the first reduction gear 172a to be repeatedly contacted with and separated from each other, and as the third reduction gear 174 collides against the side of the first reduction gear 172a, at this time, collision sounds and vibrations may be generated (See FIGS.3B and 3C).

As the first reduction gear 172 comes into contact with the frame F, further, collision sounds and vibrations may be generated.

As the side of the first reduction gear 172 is repeatedly contacted with and separated from the frame F, furthermore, collision sounds and vibrations may be generated.

Accordingly, noise may be generated at the time of photo print, and set rotation ratio values may be changed due to the movements and vibrations of the gears, thereby making a quality of print deteriorated.

If the first reduction gears 172 and 172a and the third reduction gears 174 and 174a are fitted to one rotary shaft SH1, like this, the first reduction gear 172a and the third reduction gear 174 having different rotation ratios come into contact with each other, thereby having an influence on their rotation speed.

While the third reduction gears 174 and 174a are rotating, in detail, the rotary force is transferred to the first reduction gears 172 and 172a disposed in the parallel relation with the third reduction gears 174 and 174a, so that the first reduction gears 172 and 172a also rotate. In this case, a transferring speed of the paper becomes different from a given transferring speed, thereby undesirably making a quality of print deteriorated.

### [Disclosure]

### [Technical Problem]

Accordingly, the present invention has been made in view of the above-mentioned problems occurring in the related art, and it is an object of the present invention to provide a driving mechanism for a photo printer that is capable of preventing gears fitted to a single shaft in parallel relation with each other from being repeatedly contacted with and separated from each other during rotation of the gears, thereby avoiding the generation of noise and vibrations from the gears and also improving a quality of print.

It is another object of the present invention to provide a driving mechanism for a photo printer that is capable of preventing mutual interference between gears fitted to a single shaft in parallel relation with each other.

### [Technical Solution]

To accomplish the above-mentioned objects, according to the present invention, there is provided a driving mechanism for a photo printer, the photo printer having a frame for accommodating paper therein and a platen roller coupled to the frame to transfer paper, the driving mechanism including: a motor for providing a rotary force to the platen roller; a motor pinion disposed on one side of the frame to output the rotary force of the motor; at least one or more reduction gears coupled to a side wall of the frame to reduce the rotary force of the motor pinion; a final gear coupled to the platen roller to receive the reduced rotary force from the reduction gears; and a pressurizing member for elastically pressurizing the reduction gears against the side wall of the frame.

According to the present invention, desirably, the driving mechanism further includes a fixing member fitted to an end periphery of a rotary shaft having the reduction gears fitted thereto to prevent the reduction gears from being separated from the rotary shaft, and the pressurizing member is disposed between the reduction gears and the fixing member.

According to the present invention, desirably, the driving mechanism further includes a washer between the pressurizing member and the reduction gears.

According to the present invention, desirably, the pressurizing member includes any one of a coil spring, elastic rubber, and elastic sponge adapted to pass the rotary shaft of the reduction gears therethrough.

According to the present invention, desirably, the reduction gears include: a first reduction gear fitted to a first rotary shaft fixed to one side of the frame and having a driven gear engaging with the motor pinion; a second reduction gear fitted to a second rotary shaft adjacent to the first rotary shaft and having a driven gear engaging with a drive gear of the first reduction gear; a third reduction gear fitted to the first rotary shaft and having a driven gear engaging with a drive gear of the second reduction gear; a fourth reduction gear fitted to the second rotary shaft and having a driven gear engaging with a drive gear of the third reduction gear; and a fifth reduction gear fitted to a third rotary shaft adjacent to the second rotary shaft and having one side engaging with a drive gear of the fourth reduction gear and the other side engaging with the final gear.

According to the present invention, desirably, the pressurizing member is fitted to an end periphery of the first rotary shaft to elastically pressurize the first reduction gear and the second reduction gear against the side wall of the frame.

According to the present invention, desirably, the driving mechanism further includes an interference prevention member disposed between the first reduction gear and the third reduction gear or between the second reduction gear and the fourth reduction gear.

### [Advantageous Effects]

According to the present invention, the driving mechanism for a photo printer can prevent the gears fitted to the single shaft in parallel relation with each other from being repeatedly contacted with and separated from each other during rotation of the gears, thereby avoiding the generation of noise and vibrations from the gears and also improving a quality of print.

In addition, the driving mechanism for a photo printer according to the present invention can prevent the mutual interference between the gears fitted to the single shaft in parallel relation with each other, so that a given gear reduction ratio is maintained to allow the paper to be transferred at a constant speed.

### [Brief Description of Drawings]

FIG.1 is a sectional view showing a conventional photo printer.
FIGS.2 to 3C show a driving mechanism for the conventional photo printer of FIG.1.
FIGS.4 and 5 show a driving mechanism for a photo printer according to an embodiment of the present invention.
FIG.6 shows an operating state of the driving mechanism for a photo printer according to the embodiment of the present invention.
FIG.7 shows a driving mechanism for a photo printer according to another embodiment of the present invention.

### [Mode for Invention]

Hereinafter, an explanation on a configuration and an operation of a photo printer according to an embodiment of the present invention will be in detail given with reference to the attached drawing.

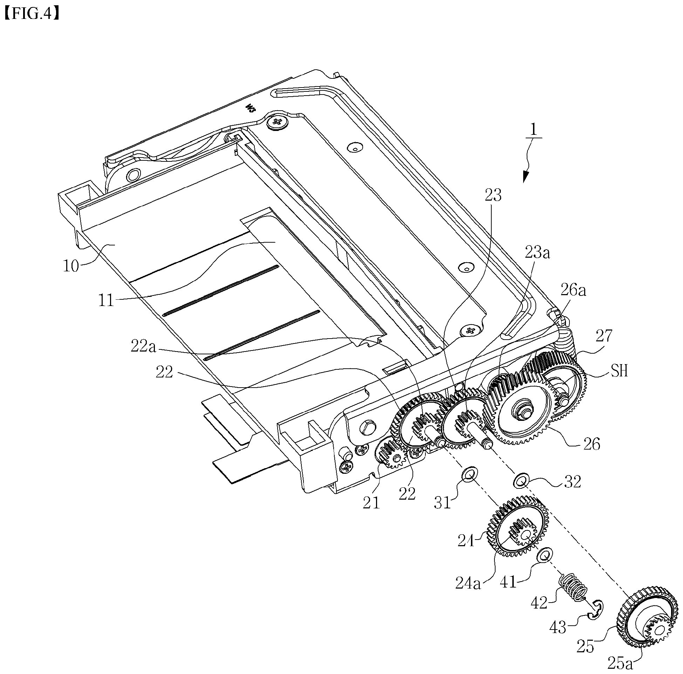

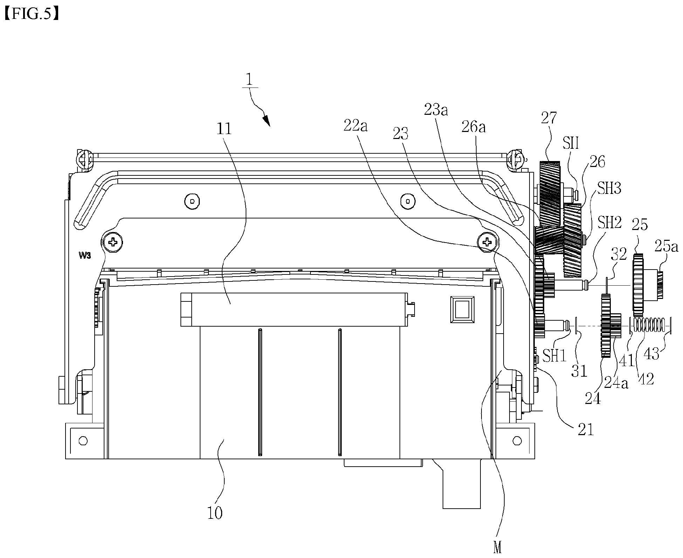

As shown in FIGS.4 and 5, a photo printer 1 according to the present invention includes a frame F for accommodating paper therein and a feed roller disposed in the frame F to feed the paper forward.

A paper accommodating part 10 is disposed between both side walls of the frame F to stack the paper therein.

According to the present invention, further, the feed roller includes a pickup roller 11 located protrudingly from a bottom surface of the paper accommodating part 10 and a platen roller (See a reference symbol R2 of FIG.1) coupled to the frame F to discharge the paper fed from the pickup roller 11 forward.

According to the present invention, also, the photo printer includes a thermal printing head disposed above the platen roller R2 to apply heat to the paper.

Now, an explanation on a driving mechanism for transferring the paper according to the present invention will be in detail given. As shown, the driving mechanism includes a motor M, a motor pinion 21, first to fifth reduction gears 22 to 26, and a final gear 27.

The motor pinion 21 is coupled to the motor M, and each of the first to fifth reduction gears 22 to 26 has a shape of a double gear having double diameters. Further, the final gear 27 is fitted to a shaft of the platen roller R2. According to the present invention, also, the motor pinion 21 and the first to fourth reduction gears 22 to 25 are spur gears, and the fifth reduction gear 26 and the final gear 27 are helical gears.

A rotary force of the motor M is transferred to the motor pinion 21, and the motor pinion 21 engages with the driven gear 22 of the first reduction gear. Next, a drive gear 22a of the first reduction gear engages with the driven gear 23 of the second reduction gear, and a drive gear 23a of the second reduction gear engages with the driven gear 24 of the third reduction gear. After that, a drive gear 24a of the third reduction gear engages with the driven gear 25 of the fourth reduction gear, and a drive gear 25a of the fourth reduction gear engages with the driven gear 26 of the fifth reduction gear. Sequentially, a drive gear 26a of the fifth reduction gear engages with the final gear 27, so that the rotary force of the motor M is transferred to the platen roller R2.

On the other hand, the first reduction gears 22 and 22a and the third reduction gears 24 and 24a are fitted to a first rotary shaft SH1. In the same manner as above, the second reduction gears 23 and 23a and the fourth reduction gears 25 and 25a are fitted to a second rotary shaft SH2.

If two or more reduction gears are fitted to one rotary shaft, like this, movements in an axial direction occur during the rotation of the reduction gears so that contact and separation between the adjacent reduction gears occur repeatedly, thereby generating impact sounds and vibrations from the reduction gears.

So as to prevent the contact and separation between the adjacent reduction gears fitted to the same rotary shaft from occurring repeatedly, the driving mechanism according to the present invention further includes a pressurizing member for elastically pressurizing the reduction gears against the side wall of the frame. In detail, the pressurizing member pressurizes the reduction gears against the side wall of the frame F to prevent the adjacent reduction gears from being separated from each other, so that the occurrence of the impact sounds and vibrations can be prevented.

According to the present invention, the pressurizing member is a coil spring 42 fitted to the first rotary shaft SH1. In more detail, the first reduction gears 22 and 22a, the third reduction gears 24 and 24a, and the coil spring 42 are fitted to the first rotary shaft SH1. The coil spring 42 serves to elastically pressurize the first reduction gears 22 and 22a and the third reduction gears 24 and 24a against the side wall of the frame F, thereby preventing the reduction gears from being separated from each other.

At this time, if the coil spring 42 comes into direct contact with the third reduction gears 24 and 24a, friction occurs during the rotation of the third reduction gears 24 and 24a, and so as to gently rotate the third reduction gears 24 and 24a, a washer 41 is disposed between the third reduction gears 24 and 24a and the coil spring 42. The washer 41 is made of a material having a small frictional force, like a metal material, and has a shape of a ring having a through hole adapted to pass the first rotary shaft SH1 therethrough.

After the first reduction gears 22 and 22a, the third reduction gears 24 and 24a, the washer 41, and the coil spring 42 are fitted sequentially to the first rotary shaft SH1, further, a snap ring 43 as a fixing member for fixing the fitted parts to the first rotary shaft SH1 is fitted to the first rotary shaft SH1, thereby preventing the fitted parts from being separated from the first rotary shaft SH1. The snap ring 43 includes a generally C or E ring.

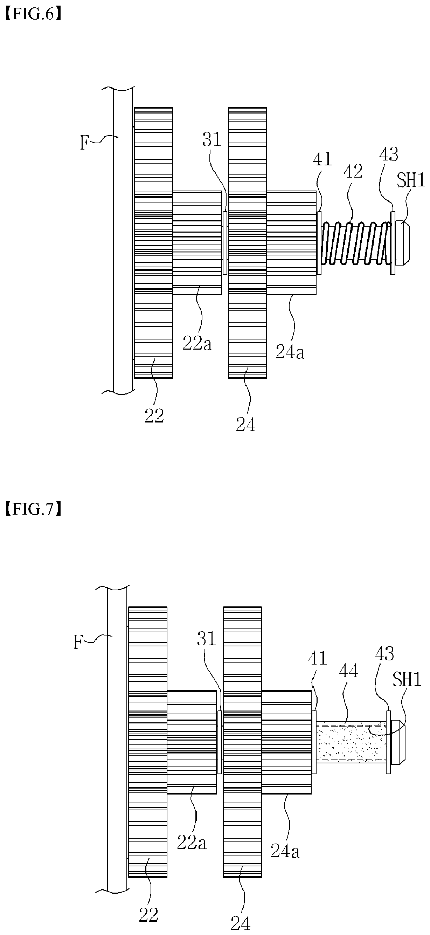

Now, an operating state of the driving mechanism according to the present invention will be explained with reference to FIG.6.

As shown, the first reduction gears 22 and 22a and the third reduction gears 24 and 24a are fitted to the first rotary shaft SH1 in parallel relation with each other. As mentioned above, the length of the first rotary shaft SH1 is greater than the sum of the widths of the first reduction gears 22 and 22a and the third reduction gears 24 and 24a so as to improve their assembly. As the coil spring 42 is fitted to one end periphery of the first rotary shaft SH1, however, the first reduction gears 22 and 22a and the third reduction gears 24 and 24a are always pressurized elastically against the side wall of the frame F, so that their left and right movements can be minimized during their rotation. Accordingly, the first reduction gears 22 and 22a always come into contact with the frame F, and the third reduction gears 24 and 24a always come into contact with the first reduction gears 22 and 22a, thereby preventing the first reduction gears 22 and 22a and the third reduction gears 24 and 24a from being repeatedly contacted and separated to avoid their collision. In detail, noise and vibrations, which occur when the first reduction gears 22 and 22a collide against the frame F and when the third reduction gears 24 and 24a collide against the first reduction gears 22 and 22a, can be prevented.

FIG.7 shows a driving mechanism for a photo printer according to another embodiment of the present invention, and in this case, the pressurizing member is constituted of cylindrical elastic rubber 44. In detail, the cylindrical elastic rubber 44 is fitted between the washer 41 and the snap ring 43. Of course, the cylindrical elastic rubber 44 has a through hole formed on a center thereof to pass the first rotary shaft SH1 therethrough.

According to the present invention, like this, only if the pressurizing member is fitted to the first rotary shaft SH1 to elastically pressurize the third reduction gears 24 and 24a against the side wall of the frame F, other known means may be used as the pressurizing member. Instead of the elastic rubber, for example, elastic sponge may be used as the pressurizing member.

The pressurizing member may be fitted to the end periphery of the second rotary shaft SH2. As well, the pressurizing member may be fitted to the end periphery of a third rotary shaft SH3 to which a reduction gear having a single axis is fitted. However, the rotary speeds of the reduction gears fitted to the first rotary shaft SH1 are faster than those of the reduction gears fitted to the second rotary shaft SH2, so that collision sounds and vibrations are generated more strongly. Accordingly, it is most effective that the pressurizing member is fitted to the first rotary shaft SH1. In addition to the end periphery of the first rotary shaft SH1, further, it is possible that the pressurizing member is fitted to a space between the first reduction gears 22 and 22a and the third reduction gears 24 and 24a and to a space between the side wall of the frame F and the first reduction gears 22 and 22a.

On the other hand, the first reduction gears 22 and 22a and the third reduction gears 24 and 24a are fitted to the first rotary shaft SH1, but they have to have no influence on each other. In the same manner as above, the second reduction gears 23 and 23a and the fourth reduction gears 25 and 25a are fitted to the second rotary shaft SH2, but they have to have no influence on each other.

According to the present invention, washers 31 and 32 as interference prevention members are provided to spatially separate the reduction gears fitted to the same shafts from each other, so that the reduction gears fitted to the same shafts SH1 and SH2 do not have any influence on each other.

The washers 31 and 32 take a shape of a ring made of a metal material and having a through hole formed at the center thereof to pass the first rotary shaft SH1 and the second rotary shaft SH2 therethrough.

The washers 31 and 32 are fitted to the reduction gears, especially, to the space between the plurality of reduction gears fitted to the first rotary shaft SH1 and to the space between the plurality of reduction gears fitted to the second rotary shaft SH2.

According to the present invention, the washer 31 is disposed between the first reduction gears 22 and 22a and the third reduction gears 24 and 24a rotatably fitted to the same shaft as each other.

In the same manner as above, the washer 32 is disposed between the second reduction gears 23 and 23a and the fourth reduction gears 25 and 25a rotatably fitted to the same shaft as each other.

In detail, the washer 31 is disposed between the first reduction gears 22 and 22a and the third reduction gears 24 and 24a, and even if the third reduction gears 24 and 24a rotate, they have no influence on the first reduction gears 22 and 22a adjacent thereto.

In the same manner as above, the washer 32 is disposed between the second reduction gears 23 and 23a and the fourth reduction gears 25 and 25a, and even if the fourth reduction gears 25 and 25a rotate, they have no influence on the second reduction gears 23 and 23a adjacent thereto.

Accordingly, the reduction gears rotate at set rotation ratios, while performing reduction in rotation, so that the paper can be transferred at a given transferring speed, thereby improving a quality of print.

## Claims

1. A driving mechanism for a photo printer, the photo printer having a frame for accommodating paper therein and a platen roller coupled to the frame to transfer paper, the driving mechanism comprising:
a motor for providing a rotary force to the platen roller;
a motor pinion disposed on one side of the frame to output the rotary force of the motor;
at least one or more reduction gears coupled to a side wall of the frame to reduce the rotary force of the motor pinion;
a final gear coupled to the platen roller to receive the reduced rotary force from the reduction gears; and
a pressurizing member for elastically pressurizing the reduction gears against the side wall of the frame.

2. The driving mechanism according to claim 1, further comprising a fixing member fitted to an end periphery of a rotary shaft having the reduction gears fitted thereto to prevent the reduction gears from being separated from the rotary shaft, the pressurizing member being disposed between the reduction gears and the fixing member.

3. The driving mechanism according to claim 2, further comprising a washer between the pressurizing member and the reduction gears.

4. The driving mechanism according to claim 2, wherein the pressurizing member comprises any one of a coil spring, elastic rubber, and elastic sponge adapted to pass the rotary shaft of the reduction gears therethrough.

5. The driving mechanism according to claim 1, wherein the reduction gears comprise:
a first reduction gear fitted to a first rotary shaft fixed to one side of the frame and having a driven gear engaging with the motor pinion;
a second reduction gear fitted to a second rotary shaft adjacent to the first rotary shaft and having a driven gear engaging with a drive gear of the first reduction gear;
a third reduction gear fitted to the first rotary shaft and having a driven gear engaging with a drive gear of the second reduction gear;
a fourth reduction gear fitted to the second rotary shaft and having a driven gear engaging with a drive gear of the third reduction gear; and
a fifth reduction gear fitted to a third rotary shaft adjacent to the second rotary shaft and having one side engaging with a drive gear of the fourth reduction gear and the other side engaging with the final gear.

6. The driving mechanism according to claim 5, wherein the pressurizing member is fitted to an end periphery of the first rotary shaft to elastically pressurize the first reduction gear and the second reduction gear against the side wall of the frame.

7. The driving mechanism according to claim 5, further comprising an interference prevention member disposed between the first reduction gear and the third reduction gear or between the second reduction gear and the fourth reduction gear.
